# EUROPEAN PATENT SPECIFICATION

(11) **EP 2 324 701 B1**
(45) Date of publication and mention of the grant of the patent: **17.10.2012**
(21) Application number: 10190964.6
(22) Date of filing: 12.11.2010
(51) Int. Cl.: A01G 17/12, F16G 11/14

(54) **Fastening system**
Befestigungssystem
Système d'attachement

(30) Priority: 23.11.2009 IT PN20090069
(43) Date of publication of application: 25.05.2011
(73) Proprietor: Bortolussi, Claudio, 33080 Fiume Veneto (PN) (IT); Bortolussi, Franco, 33080 Fiume Veneto (PN) (IT)
(72) Inventor: Bortolussi, Claudio, 33080 Fiume Veneto (PN) (IT); Bortolussi, Franco, 33080 Fiume Veneto (PN) (IT)
(74) Representative: Petruccelli, Davide

(56) References cited:
- EP-A2- 1 342 404
- CA-A1- 2 551 894
- DE-B3-102007 010 428
- US-A- 3 521 401
- US-A1- 2002 035 766

## Description

### TECHNICAL FIELD OF INVENTION

The present invention relates to a collar for removably fastening one or more wire elements on a pole to form rows of grapevines or fruit trees, olive groves or fences. The present invention also refers to a method for installing the same.

### BACKGROUND OF THE INVENTION

In general, in the field of viticulture, the vines are arranged in lines and suitably spaced to form rows. The structure for supporting the vines is made by driving into the ground poles spaced apart and aligned so as to form one or more rows. The poles in each row are used as supports to hold up the wires that extend along the whole row and that serve to support the vine-shoots and arrange them in a desired configuration.

The form of these structures has progressively evolved in time into diverse configurations that basically depend on the types of vine or other fruit that are to be cultivated, on the manual or mechanized operations that are to be carried out and on other factors.

The materials used in the construction of the poles have also been increasingly replaced on the basis of the requirements of strength and uniformity: initially they were made mostly from wooden poles, while nowadays they are mainly made of cement or metal of various forms and cross sections (round, square, rectangular, polygonal).

The same can also be said regarding the wires strung between said poles: initially they were made of galvanized iron, and in time they were replaced by stainless steel wires appropriately designed for application in the viticultural field.

In the form that is currently most in use in the viticultural field, the row consists of a plurality of equidistant poles aligned with each other and reciprocally interconnected by a fixed horizontal wire called "carrying wire" or "training wire" that is fastened on said poles at a suitable height above the ground. On the two poles that are placed at the ends of each row, called "head poles", is also fastened at least one wire, which in the specific field is commonly called "containment wire".

The strain that the containment wire is expected to withstand and that is discharged on the head pole is quite high but also very variable, as can be appreciated, for example, from the difference in weight of the plants from the production season to the winter season in rows stretching even hundreds of meters, or again from the considerable "sail effect" caused by the wind blowing across a row of grapevines.

For this reason, beyond the use of materials having increasingly advanced mechanical characteristics, it is necessary to use suitable means of fastening the wires on the head poles, commonly called "collars", that are strong but also flexible so as to be able to adapt to the different conditions of use.

Italian patent IT 1 217 262 discloses a fastening and adjusting means for the viticultural field consisting essentially of a wire with solid cross section bent and shaped according to a form substantially matching the external peripheral surface of the pole, so as to adhere perfectly to the pole. The collar is also provided with a roller on which the containment wire can be wound to give it the desired tension and keep the wire firmly associated with the collar.

In the present state of the art, there is however a large variety of cross sections in the poles that are commonly used in the field; a certain dissimilarity may be found within the same vineyard or even in the same row if, for example, a damaged pole was replaced with a pole of different structure.

Considering the impossibility of adapting a collar of the type disclosed in IT 1 217 262 to a pole having a cross section that is unlike the one for which the collar was made, it is disadvantageously essential for the manufacturers of accessories for viticulture to predispose the production of hundreds of collars of different forms and sizes, with consequent reduced economies of scale, the necessity of frequent variations in the settings of the production equipment, and increased management costs.

The British patent application GB 2 244 089 discloses a device for fastening two adjacent objects to each other, in particular a support pole and a tree trunk, comprising a wire-like element, such as a rope or a cable, which is wound around the support and closed through the use of a locking means comprising a plate having a plurality of openings through which are passed the free ends of the rope. One or more of the openings present on the plate has a projection that extends slightly toward the centre of the opening; these projections catch the cable passing therein and hold it firmly in the desired position.

Devices such as those described above are not however suitable to be used as collars in viticulture: first of all, they do not have a fastening means, preferably removable and adjustable, for the containment wires that should branch off from it.

Further, to hold the weight of the row of plants it is necessary to use wires or ropes to form the fastening collar that are particularly resistant both for what regards the tensile stress to which they are subjected, and the abrasions caused by the friction of the collar itself against the support poles or also for the considerable stresses to which the collars are subjected during the mechanized operations carried out in the vineyard. Moreover, it is evident that the wires making up the collar are subject to atmospheric agents, in particular water and thermal shocks that could involve structural changes in their constituent material, as well as to anti-parasitic chemical agents used in viticulture that could cause the loss of the essential properties that make the collars suitable for their intended use.

From what said above, therefore, it is evident that the use of wires in viticulture for making fastening collars is unsuitable unless they have a duration comparable to the life of the vineyard, that is, about twenty-five years; in practice, unless the wires are made of metal or of particular types of plastic.

Further, the operation of the locking system in the device disclosed in GB 2 244 089 is substantially based on the interaction/penetration between the projections present in the openings on the plate and the wire element; this can certainly not be applied to a wire element, performing the function of a collar, made with metal alloys and subjected to high tension forces.

EP-A-1 342 404 discloses a device including a clamp member and a holding member together with a fixing arrangement for drawing said two members towards one another such that said members may be clamped to a post or garden cane; the holding member includes means for attaching a plant restraining member thereto. The device comprises a lot of separate pieces so that it is complicate in assembling and disassembling.

US-A- 3,521,401 disclose a tree-supporting unit which includes a rigid bendable member and a flexible encircling member. The rigid member is provided with a plurality of positioning apertures to be engaged by rivets in order to adjust the distance between the tree and a stationary base. So, the adjustment cannot be continuous.

### SUMMARY OF THE INVENTION

The main task of the present invention is to resolve the drawbacks of the collars of known type. In the scope of this task, one objective of the invention is to provide a collar for fastening one or more wire elements on a pole in a row of plants that is sufficiently flexible to adapted to the shape of the external surface of supports of any shape and size, but which at the same time offers the characteristics of strength and durability required for use, in particular, in viticulture.

A further objective of the present invention consists of providing a simple-to-install collar for fastening one or more wire elements to a pole, the same collar offering the possibility, according to a preferred embodiment, of being configured in a plurality of fastening positions around said pole.

A further objective of the present invention is to provide a collar for fastening one or more wire elements to a pole, said collar allowing the removal of one or more of said wire elements without necessarily having to loosen the collar fastened to the pole.

One not least important objective of the present invention is to provide a method of installation of a collar to fasten one or more wire-like elements to a pole, said method allowing to be carried out without requiring the use of any tool but with the use of the hands alone.

Another objective of the invention consists of providing a method of installation of a collar for fastening one or more wire elements to a pole to reduce considerably the risk of the collar sliding along the pole due to the effect of the stresses to which said wire elements are subjected. The method of installation according to the invention is also designed to ensure a rapid removal of the collar from the pole when necessary, operating in all cases without the help of any tool or utensil.

This entails therefore an optimization in the use of resources for manufacturers of accessories for viticulture that enables the use of a single production line to make a single collar adaptable without difficulty to any configuration of the pole, thus eliminating the necessity of making a large range of different models, and consequently achieving considerable economies of scale and avoiding having to stock considerable quantities of materials, with a considerable saving of materials and personnel.

Moreover, due to its extreme adaptability, the collar of the present invention certainly also offers advantages to vineyard operators since, in the case of damage to one or more poles in the vineyard, even if poles have to be replaced with ones of different configuration, they will not need to replace the entire collar.

The above task and objectives, and others that will be better disclosed later, are attained through the construction of a fastening collar in agreement with Claim 1 and a method of installation of a collar according to Claim 11.

### BRIEF DESCRIPTION OF THE FIGURES

Further characteristics and advantages of a fastening collar made according to the present invention will be more evident from the following description of some particular, but not exclusive, embodiments illustrated purely by way of non-limiting example with reference to the following figures:
- Figure 1 is a perspective view of the fastening collar of the present invention according to a first embodiment as it appears when mounted on a pole;
- Figure 2 illustrates some of the elements making up the fastening collar of Figure 1 shown separately;
- Figure 3 is a longitudinal cross section of the locking device;
- Figure 4 is a perspective view of a first variant of the fastening collar according to the present invention;
- Figure 5 is a perspective view of an element making up the fastening collar of a second variant according to the present invention.

### DETAILED DESCRIPTION OF THE INVENTION

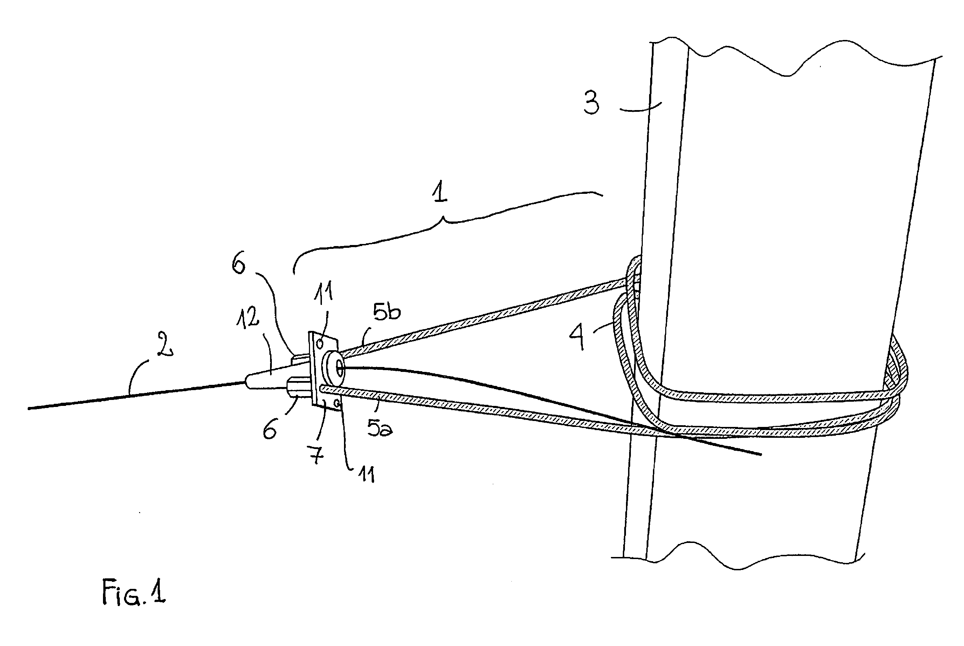

With reference to the figures cited above, in particular Figure 1 illustrating a first embodiment of the present invention, reference numeral 1 is used to generally indicate a fastening collar for one or more wire elements 2 on a support pole 3 belonging to a row of grapevines in a vineyard.

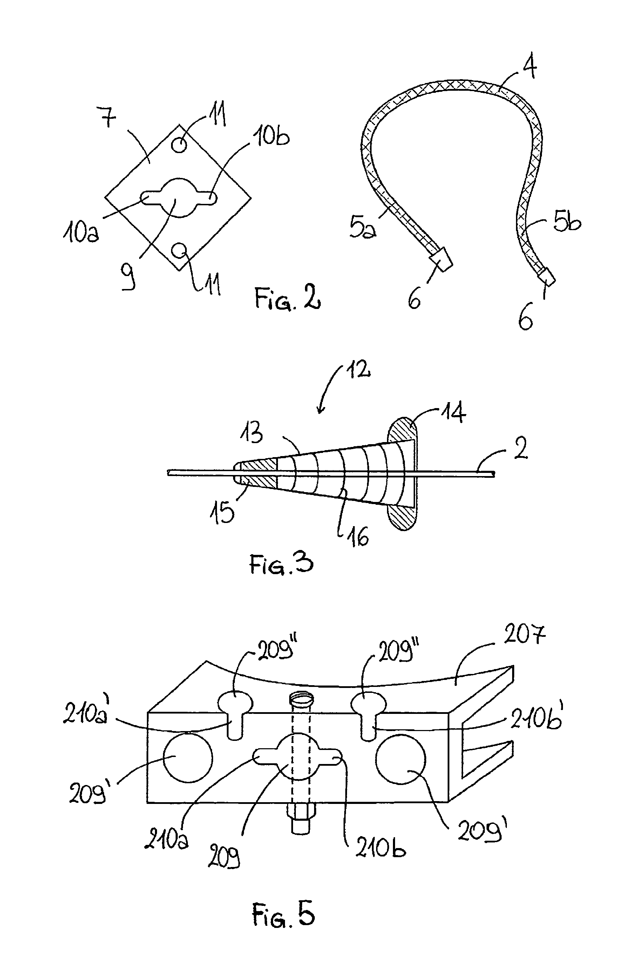

The collar 1 consists of a winding element 4 (Figure 2) made preferably by means of a plurality of small-diameter solid cross-section metal wires that are first wound helically to form groups of wires, and then said groups are helically wound again on each other and welded together at their ends so as to form a highly flexible metal rope having the characteristics of strength required by the particular application. In the portions near the ends 5a, 5b of the rope 4 so formed are placed retaining means 6 consisting, for example, of hollow cylinders having a length of about one centimetre that are slipped over the same rope 4 and, once placed in the desired position, are crimped cold so as to form an interference fit between the hollow bore of the cylinder and the rope 4, or they are welded thereon.

The winding element 4 in this form is prearranged to be wound around a pole according to a method that will be illustrated below.

One support element 7, that preferably has the configuration of a metal plate (Figure 2) of suitable shape and size, is provided with fastening means 8 consisting of through openings of different sizes. In the central portion of the support element 7 there is a first access opening 9, preferably circular, being of a size sufficient to allow each of the two ends 5a and 5b of the rope 4 to which the retaining means 6 have been applied to pass easily through it and to allow the lodging therein of the body 13 of a locking device 12 as will be described later. Two stop sections 10a and 10b, preferably defined by two holes, are made contiguous to and laterally to the access opening 9, in positions opposite each other. These stop sections 10a and 10b must be of a size just sufficient to allow the sideways insertion with a slight pressure of the ends 5a, 5b of the rope 4 previously inserted, one at a time or both at the same time, through the access opening 9.

Naturally, if so desired, the support element 7 may include two or more access openings 9, and each of said openings 9 may be equipped with one or more stop sections (10a, 10b).

On the support element 7 are also provided a plurality of other fastening openings 11, preferably in the form of through holes, that may be used for different purposes, for example to connect the support element 7 to a pole 3 through known means such as for example braces, nails or binding wires.

The wire elements 2 that will extend in the direction of the vine row are connected to the collar 1 through a locking device 12 that can be inserted into the access opening 9 of the support element 7.

The locking device 12 shown in Figure 3 is preferably made of metal and has a body 13 consisting advantageously of a hollow element and having a tapered external surface, and of a doughnut-shaped head 14, fastened to the body 13 for example by welding and slightly projecting from it in a radial direction.

The body 13 includes at least one transversal cross section with a shape that matches the access opening 9, so that the body 13 can be removably fastened by interference fit within the opening 9.

Inside the tapered body 13 (Figure 3), near the opening on the narrower part of the same, are present retaining means 15, for example wedge-shaped elements, that project from the internal borders of the body 13 toward the centre of the cavity, partially closing it. Said retaining means 15 are connected to an end of a contrast element 16 consisting of a compression spring which, at the other end, abuts against the internal surface of the head 14. The particular internal configuration of the locking device 12 allows the passage of a rigid wire element in the direction going from the narrower part of the body 13, passing through the retaining means 15 and coils of the spring 16, to the head part 14.

The pressure exerted by the wire element on the entrance to the body 13 between the retaining means 15 causes the compression of the spring 16 associated with them and thus allows the insertion of the wire element 2 into the locking device 12.

Once the pressure exerted by the force for inserting the wire element 2 into the locking device 12 ceases, that is, when the desired tensioning of the wire element 2 is achieved, the contrast spring 16 pushes the retaining means 15 toward their idle position so that they become wedged between the internal surface of the body 13 and the wire element 2, thus preventing the latter to be pulled out. In other words, the locking device 12 is configured internally so as to allow the passage therein of a wire element 2 only in one direction, while preventing through suitable retaining means 15 the possibility of its being pulled out in the other direction.

The internal configuration of the locking device 12 is such as to allow the engagement of the support element 7 in the access opening 9 through the tapering of the body 13. If the tension applied on the wire element is high, the head 14 of the locking element 12 may abut against the surface of the support element 7, thus creating a stable connection between the wire element 2 and the fastening collar 1.

In addition to the use of a fastening device of the type described above, the locking of one or more wire elements can also be achieved by using other more complex, costlier and more difficult to install devices, such as for example wire-tensioning accessories, which are mentioned not by way of limitation, being at the same time suitable to satisfy further requirements, such as for example to adjust the tension applied to one or more wire elements 2. Such wire-tensioning accessories may, for example, have a ring-shaped terminal that can be inserted into the access opening 9 to be fastened to the support element 7 by means of a pin system (shown with broken lines in Figure 5), if necessary provided with threads, that is received within the ring-shaped terminal.

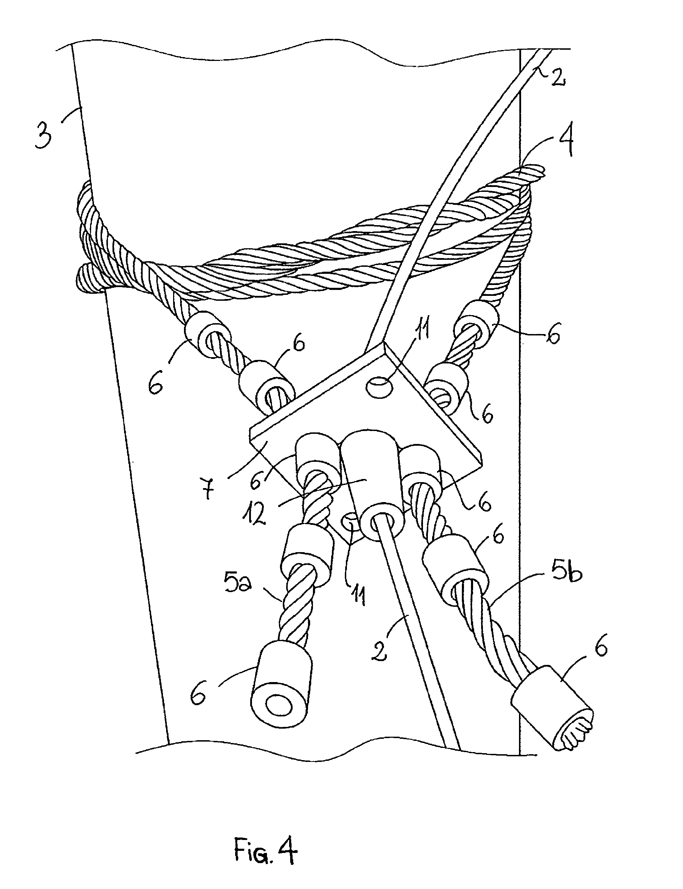

Figure 4 illustrates a first variant embodiment of the present invention, in which like objects are assigned a numbering corresponding to the same objects of the first embodiment.

For what concerns the description of said components, reference is made to what was already explained with reference to the first embodiment.

In the same way as in the first embodiment, the fastening collar 1 includes a winding element 4 advantageously formed by metal wires of relatively small diameter intertwined to form a rope, by a support element 7 provided with fastening means 8, and by a locking device 12 that contains the wire element and that abuts inside the opening 9.

The substantial difference provided by the first variant is the presence of a plurality of retaining means 6 that are applied as described in the first embodiment. Said retaining means 6 are arranged in the end portions 5a, 5b of the rope 4 at a distance from each other that, for each pair of adjacent retaining means 6, can be constant or vary, depending on requirements.

This entails the further advantage of having the possibility of deciding, in the assembly phase, on the most suitable point to fasten the end portions 5a, 5b of the rope 4 to the support element 7, in relation, for example, to the size of the pole or to the position desired for the support element 7 with respect to the pole.

Figure 5 shows a second variant embodiment of the present invention, in which like objects are assigned a numbering corresponding to the same objects of the first embodiment.

For what concerns the description of said components, reference is made to what was already explained with reference to the first embodiment.

In the same way as in the first variant embodiment, the fastening collar 1 includes a winding element 4 advantageously formed by metal wires of relatively small diameter intertwined to form a rope on whose end portions 5a, 5b are arranged a plurality of retaining means 6 that have the advantage of offering a plurality of fastening positions as previously described.

The substantial differences that distinguish this second embodiment lie in the particular configuration of the support element 207 suitable to fasten at least one and preferably two wire-like elements 2 to the pole 3. On the surface of said support element 207 are arranged a plurality of fastening means 208 consisting of through openings having different shapes corresponding to the requirements of the mode of application desired.

In fact, the further advantage offered by this second embodiment is the possibility of having a single support element 207 that can be used interchangeably to lock one or more wire elements 2, to suit the requirements of the end user.

If wishing to use the fastening collar 1 relative to the second embodiment to fasten a single wire element 2, the user will use the central access opening 209, which is provided laterally with two stop sections 210a, 210b, to insert the two ends 5a, 5b of the rope 4, then locking them in place by inserting a locking device 12.

If, on the other hand, it is necessary to fasten two wire elements 2 to the pole 3, the more external access openings 209' will be used as seats for the corresponding locking devices 12, while the ends 5a, 5b of the rope 4 may be inserted through access openings 209" and then held locked in suitable stop sections 210a', 210b', shaped so as to cooperate with the retaining means 6 when the wire element 2 tensioned.

As previously mentioned, the locking device 12 may be in various configurations, while always meeting the purposes of the present invention of fastening the wire elements 2 to the collar 1 and at the same time locking the ends 5a, 5b of the winding element 4 in the stop sections 10a, 10b. It may, for example, have a body having at least one cross section shaped so as to match the access opening or it may include an ring-shaped terminal suitable to be inserted into the access opening and then locked by means of a pin system that is received within the ring-shaped terminal.

The method to follow for manually installing a collar 1 for fastening on a pole 3 one or more wire elements 2 belonging to a row of plants includes a number of phases. First of all it is necessary to arrange a winding element 4 of sufficient length around the external perimetric surface of the pole 3.

While holding one of the two ends of the winding element 4 steady in one hand, the other end 5b is twisted at least one full turn around the pole, thus obtaining at least one winding coil around the pole 3 and having, at the end of this operation, the two ends 5a and 5b parallel and arranged on the same side of the pole. When this operation is being carried out, the end 5b can advantageously be passed at least once inside said at least one winding coil created around the pole 3. In this manner, the friction developed between the various coils of the winding element 4 is exploited to give the collar 1 a greater rigidity.

To prevent the possibility of the fastening collar 1 sliding along the pole 3 as a result of the stresses to which the wire elements 2 are subjected, a force is applied to the two ends 5a, 5b in order to tighten the winding element 4 as much as possible against the external surface of the pole at the desired height.

Given its particular flexible construction, the collar will tend to adapt to the external peripheral surface of a pole of any shape and size.

Subsequently, the two ends 5a and 5b are associated with the support element 7, preferably by inserting them, one at a time or both at the same time, into the access opening 9 of the support element 7, and engaging one portion inside a stop section 10a, 10b. In particular, the portions of the rope 4 located just behind the retaining means 6 or the rope portions 4 included between pairs of contiguous retainers 6 must be pushed laterally into one of the two corresponding stop sections 10a, 10b.

Finally, a locking device 12 is associated with the support element 7 to prearrange the collar to receive the wire element 2.

To further increase the fastening force of the rope 4 on the support element 7, the access opening 9 is shaped so as to hold within it the body 13 of the locking device 12. This device will be inserted by first leading the narrower end of the tapered body 13 starting from inside the support plate 7, 207, or the side facing the pole 3, toward the outside of the plate, that is, the side toward which will be extended the wire elements 2 that make up the row.

In this manner, the ends 5a, 5b are advantageously locked inside the stop sections 10a, 10b from which they cannot be extracted, thanks to the presence of the locking device 12 in the access cavity 9 to lock the fastening collar 1.

After having completed the above phases of installation of the collar on the pole 3, the wire elements 2 can be removably fastened to the locking device 12. As previously explained, the internal configuration of the locking device 12 makes it possible to apply tension on the wire element 2 as desired, while the shape of the head 14 of the locking device 12, abutting against the support element 7, 207, makes it possible to create a solid connection between the wire element 2 and the fastening collar 1.

Naturally, the present invention is susceptible to numerous applications, modifications or variants without thereby departing from the scope of protection as defined by the appended claims.

In addition, the materials and equipment used to realize the present invention, as well as the shapes and dimensions of the individual components, may be the most suitable for the specific requirements.

## Claims

1. Fastening collar (1), comprising:
- a winding element (4) for fastening one or more wire elements (2) on a pole (3) in a row of plants and provided with two ends (5a, 5b);
- a support element (7) provided with fastening means suitable for fastening said ends (5a, 5b) on said support element (7), wherein
said support element (7) comprises at least one locking device (12) suitable for removably fastening said one or more wire elements (2) on said support element (7) and **characterized in that in that** said fastening means cooperate with at least one retaining means (6) arranged in proximity of said ends (5a, 5b).

2. Fastening collar according to claim 1, wherein said winding element (4) is formed with a plurality of helically wound wires.

3. Fastening collar according to claims 1 or 2, wherein the support element (7) comprises a metal plate.

4. Fastening collar according to one of the previous claims, wherein said fastening means comprise an access opening (9) and at least one stop section (10a, 10b).

5. Fastening collar according to claim 4, wherein the locking device (12) comprises at least one cross section of a conjugated form matching said access opening (9).

6. Fastening collar according to one of the previous claims, wherein said retaining means (6) are made up of metal cylinders fastened by intereference fit on the winding element (4).

7. Fastening collar according to one of the previous claims, wherein said locking device (12) comprises a tapered body (13) and a head element (14).

8. Fastening collar according to claim 7, wherein said tapered body (13) comprises a cavity within which a plurality of retaining means (15) for unidirectionally locking the wire element (2) and a contrast element (16) are housed.

9. Fastening collar according to claim 7 or 8, wherein said head element (14) has a "doughnut" shape projecting radially from the tapered body (13).

10. Fastening collar according to claims 1 to 4, wherein said locking element (12) is made up of a wire-tensioning accessory.

11. Method for installing a fastening collar according to one of claims 1 to 9, **characterized by** comprising the following steps:
a) twisting the winding element (4) around a pole (3);
b) fastening two ends (5a, 5b) of the winding element (4) to said fastening means of a support element (7), bringing said fastening means to cooperate with retaining means (6) arranged in proximity of said ends (5a, 5b);
c) associating at least one locking device (12) to said support element (7).

12. Method for installing a fastening collar according to claim 11, wherein step a) consists of twisting the winding element (4) at least one substantially complete turn over the external surface of the pole (3) to form at least one coil, and of leading one of the two ends (5a, 5b) at least once inside said at least one coil.

13. Method for installing a fastening collar according to claim 11 or 12, wherein said step b) consists of inserting the two ends (5a, 5b) into an access opening (9) provided on the support element (7) and of engaging each end (5a, 5b) inside a stop section (10a, 10b).

14. Method for installing a fastening collar according to one of claims 11 to 13, further comprising a step d) of inserting said locking device (12) through an access opening (9) provided on the support element (7).

15. Method for installing a fastening collar according to claim 14, wherein the locking device (12) is provided with a substantially ring-shaped terminal, and step d) further comprises fastening said locking device (12) on the support element (7) by means of a pin-type system inserted into said ring-shaped terminal.

## Patentansprüche

1. Befestigungsverbinder (1), der umfasst:
ein Wickelelement (3) zum Befestigen eines Drahtelementes oder mehrerer Drahtelemente (2) an einem Pfosten (3) in einer Reihe von Pflanzen, das mit zwei Enden (5a, 5b) versehen ist;
ein Trageelement (7), das mit Befestigungseinrichtungen versehen ist, die zum Befestigen der Enden (5a, 5b) an dem Halteelement (7) geeignet ist, wobei
das Trageelement (7) wenigstens eine Arretiereinrichtung (12) umfasst, die zum lösbaren Befestigen des einen Drahtelementes (2) oder der mehreren Drahtelemente an dem Trageelement (7) geeignet ist, und **dadurch gekennzeichnet, dass** die Befestigungseinrichtungen mit wenigstens einer Halteeinrichtung (6) zusammenwirken, die nahe an den Enden (5a, 5b) angeordnet ist.

2. Befestigungsverbinder nach Anspruch 1, wobei das Wickelelement (4) mit einer Vielzahl spiralförmig gewickelter Drähte versehen ist.

3. Befestigungsverbinder nach den Ansprüchen 1 oder 2, wobei das Trageelement (7) eine Metallplatte umfasst.

4. Befestigungsverbinder nach einem der vorangehenden Ansprüche, wobei die Befestigungseinrichtungen eine Zugangsöffnung (9) und wenigstens einen Anschlagabschnitt (10a, 10b) umfassen.

5. Befestigungsverbinder nach Anspruch 4, wobei die Arretiereinrichtung (12) wenigstens einen Querschnitt einer korrespondierenden Form umfasst, die der Zugangsöffnung (9) entspricht.

6. Befestigungsverbinder nach einem der vorangehenden Ansprüche, wobei die Halteeinrichtungen (6) aus Metallzylindem bestehen, die durch Presspassung an dem Wickelelement (4) befestigt sind.

7. Befestigungsverbinder nach einem der vorangehenden Ansprüche, wobei die Arretiereinrichtung (12) einen konischen Körper (13) und ein Kopfelement (14) umfasst.

8. Befestigungsverbinder nach Anspruch 7, wobei der konische Körper (13) einen Hohlraum umfasst, in dem eine Vielzahl von Halteeinrichtungen (15) zum Arretieren des Drahtelementes (2) in einer Richtung und ein Gegenwirkungselement (16) aufgenommen sind.

9. Befestigungsverbinder nach Anspruch 7 oder 8, wobei das Kopfelement (14) eine Ringform hat, die radial von dem konischen Körper (13) vorsteht.

10. Befestigungsverbinder nach den Ansprüchen 1 bis 4, wobei das Arretierelement (12) aus einem Drahtspann-Zubehörteil besteht.

11. Verfahren zum Installieren eines Befestigungsverbinders nach einem der Ansprüche 1 bis 9, dadurch gekennzelchnet, dass es die folgenden Schritte umfasst:
a) Winden des Wickelelementes (4) um einen Pfosten (3);
b) Befestigen von zwei Enden (5a, 5b) des Wickelelementes (4) an der Befestigungseinrichtung eines Trageelementes (7) und Herbeiführen von Zusammenwirken der Befestigungseinrichtung mit Halteeinrichtungen (6), die in der Nähe der Enden (5a, 5b) angeordnet sind;
c) Verbinden wenigstens einer Arretiereinrichtung (12) mit dem Trageelement (7).

12. Verfahren zum Installieren eines Befestigungsverbinders nach Anspruch 11, wobei Schritt a) darin besteht, dass das Wickelelement (4) um wenigstens eine vollständige Tour über die Außenfläche (3) gewunden wird, um wenigstens eine Windung auszubilden, und eines der zwei Enden (5a, 5b) wenigstens einmal in das Innere der wenigstens einen Windung geführt wird.

13. Verfahren zum Installieren eines Befestigungsverbinders nach Anspruch 11 oder 12, wobei der Schritt b) darin besteht, dass die zwei Enden (5a, 5b) in eine Zugangsöffnung (9) eingeführt werden, die an dem Trageelement (7) vorhanden ist, und jedes Ende (5a, 5b) mit einem Anschlagabschnitt (10a, 10b) in Eingriff gebracht wird.

14. Verfahren zum Installieren eines Befestigungsverbinders nach einem der Ansprüche 11 bis 13, das des Weiteren einen Schritt d) des Einführens der Arretiereinrichtung (12) über eine Zugangsöffnung (9) umfasst, die an dem Trageelement (7) vorhanden ist.

15. Verfahren zum Installieren eines Befestigungsverbinders nach Anspruch 14, wobei die Arretiereinrichtung (12) mit einem im Wesentlichen ringförmigen Ende versehen ist und Schritt d) des Weiteren Befestigen der Arretiereinrichtung (12) an dem Trageelement (7) mittels eines Bolzen-Systems umfasst, das in das ringförmige Ende eingeführt wird.

## Revendications

1. Collier de fixation (1) comprenant :
- un élément d'enroulement (4) pour fixer un ou plusieurs élément de câble (2) sur un piquet (3) dans une rangée de plantes et muni de deux extrémités (5a, 5b) ;
- un élément de support (7) muni de moyens de fixation adaptés pour fixer lesdites extrémités (5a, 5b) sur ledit élément de support (7), dans lequel ledit élément de support (7) comprend au moins un dispositif de verrouillage (12) adapté pour fixer de manière amovible ledit un ou plusieurs élément de câble (2) sur ledit élément de support (7) et **caractérisé en ce que** lesdits moyens de fixation coopèrent avec au moins des moyens de retenu (6) disposés à proximité desdites extrémité (5a, 5b).

2. Collier de fixation selon la revendication 1, dans lequel ledit élément d'enroulement (4) est formé d'une pluralité de câbles enroulés en hélice.

3. Collier de fixation selon la revendication 1 ou 2, dans lequel l'élément de support (7) comprend une plaque de métal.

4. Collier de fixation selon l'une quelconque des revendications précédentes, dans lequel les moyens de fixation comprennent un orifice d'accès (9) et au moins une zone de blocage (10a, 10b).

5. Collier de fixation selon la revendication 4, dans lequel le dispositif de verrouillage (12) comprend au moins une section transversale d'une forme complémentaire correspondant audit orifice d'accès (9).

6. Collier de fixation selon l'une des précédentes revendications, dans lequel les moyens de retenu (6) sont constitués de cylindres métalliques fixés par ajustement serré sur l'élément d'enroulement(4).

7. Collier de fixation selon l'une quelconque des revendications précédentes, dans lequel ledit dispositif de verrouillage (12) comprend un corps conique (13) et un élément de tête (14).

8. Collier de fixation selon la revendication 7, dans lequel le corps conique (13) comprend une cavité à l'intérieur de laquelle sont logés une pluralité de moyens de retenu (15) pour verrouiller de manière unidirectionnelle l'élément de câble (2) et un élément de contraste (16).

9. Collier de fixation selon la revendication 7 ou 8, dans lequel ledit élément de tête (14) a une forme de « beignet » faisant saillie radialement à partir du corps conique (13).

10. Collier de fixation selon les revendications 1 à 4, dans lequel ledit élément de verrouillage (12) est constitué d'un accessoire de mise en tension de câble.

11. Méthode pour installer un collier de fixation selon l'une quelconque des revendications 1 à 9, **caractérisé en ce qu'**elle comprend les étapes suivantes :
a) tordre l'élément de câble (4) autour d'un piquet (3) ;
b) fixer les extrémités (5a, 5b) de l'élément de câble (4) audit moyens de fixation d'un élément de support (7), amener lesdits moyens de fixation à coopérer avec lesdits moyens de retenu (6) disposés à proximité desdites extrémités (5a, 5b) ;
c) associer au moins un dispositif de verrouillage (12) audit élément de support (7).

12. Méthode pour installer un collier de fixation selon la revendication 11, dans laquelle l'étape a) consiste à tordre l'élément de câble (4) au moins substantiellement d'un tour complet autour de la surface externe du piquet (3) pour former au moins une spire, et à amener une des extrémités (5a, 5b) au moins une fois à l'intérieur de ladite une spire.

13. Méthode pour installer un collier de fixation selon la revendication 11 ou 12, dans laquelle l'étape b) consiste à insérer les deux extrémités (5a, 5b) dans un orifice d'ouverture (9) prévu sur l'élément de support (7) et à engager chaque extrémité (5a, 5b) à l'intérieur de la section de blocage (10a, 10b).

14. Méthode pour installer un collier de fixation selon l'une des revendications 11 à 13, comprenant en outre une étape d) d'insertion d'un dispositif de verrouillage (12) à travers un orifice d'accès (9) prévu sur l'élément de support (7).

15. Méthode pour installer un collier de fixation selon la revendication 14, dans laquelle le dispositif de verrouillage (12) est muni d'une extrémité substantiellement en forme d'anneau, et l'étape d) comprend en outre fixer le dispositif de verrouillage (12) sur l'élément de support (7) par des moyens de type système à goupille insérées dans ladite extrémité en forme d'anneau.
